# FASCICULE DE BREVET EUROPEEN

(11) **EP 2 108 444 B1**
(45) Date de publication et mention de la délivrance du brevet: **26.09.2012**
(21) Numéro de dépôt: 09354015.1
(22) Date de dépôt: 03.04.2009
(51) Int. Cl.: B01D 67/00, B81C 1/00

(54) **Procédé d'élaboration d'une membrane comportant des micropassages en matériau poreux par polissage mécano-chimique**
Verfahren zur Herstellung einer Membran durch chemisch-mechanisches Polieren, wobei die Membran Mikropassagen aus porösem Material enthält
Process of preparation of a membrane comprising micropassages filled with porous material obtained by chemical mechanical polishing

(30) Priorité: 08.04.2008 FR 0801922
(43) Date de publication de la demande: 14.10.2009
(73) Titulaire: Commissariat à l'Énergie Atomique et aux Énergies Alternatives, 75015 Paris (FR); STMicroeletronics Crolles 2 SAS, 38920 Crolles (FR)
(72) Inventeur: Coiffic, Jean-Christophe, 38000 Grenoble (FR); Rivoire, Maurice, 38240 Meylan (FR)
(74) Mandataire: Hecké, Gérard

(56) Documents cités:
- US-A1- 2001 028 872
- US-A1- 2006 194 037
- US-B1- 6 613 241
- PEYRADE ET AL: "Direct observation and localization of colloidal nanoparticles on patterned surface by capillary forces" MICROELECTRONIC ENGINEERING, ELSEVIER PUBLISHERS BV., AMSTERDAM, NL, vol. 83, no. 4-9, 1 avril 2006 (2006-04-01), pages 1521-1525, XP005391016 ISSN: 0167-9317

## Description

### Domaine technique de l'invention

L'invention est relative à un procédé de formation d'une membrane poreuse.

### État de la technique

L'efficacité des membranes dépend de la largeur de ses pores et de la surface spécifique de contact entre l'élément à filtrer et la membrane elle-même. Le contrôle de la taille des pores revêt donc une importance primordiale lors de la fabrication d'une membrane. Il est donc primordial de contrôler la taille des pores d'une membrane. La fabrication de membrane implique de plus en plus d'assembler des nanoparticules de tailles prédéfinies entre elles. De plus, les particules doivent avoir une certaine tenue mécanique afin que le flot de fluide qui traverse la membrane ne détruise ou n'entraîne les particules qui forment la partie active de la membrane (article de Kim et al. « Crossflow membrane filtration of interacting nanoparticle suspension », Journal of Membrane Science 284 (2006) 361-372).

Le document US2006/0194037 décrit un film polymère respirant qui comporte des pores. Le diamètre des pores est réduit est réduit au moyen d'un arrangement de particules homogènes.

Le document US 6613241 décrit un procédé d'introduction d'une membrane poreuse dans un micro-système électromécanique. Des cavités débouchantes sont formées pour créer des pores remplis par des agents de filtration.

Le document US2001/0028872 décrit une nanostructure munie d'un film anodisé à nanotrous. Les nanotrous sont remplis par un métal, un matériau semi-conducteur ou un oxyde.

### Objet de l'invention

L'invention a pour objet la formation d'une membrane de manière industrielle et aisée avec une grande reproductibilité dans la réalisation du matériau poreux.

Le procédé selon l'invention est caractérisé par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 à 3 représentent en coupe, de manière schématique, les étapes successives du procédé de réalisation selon l'invention,
- les figures 4 à 8 représentent en coupe, de manière schématique, des variantes du procédé de réalisation selon l'invention.

### Description de modes de réalisation préférentiels de l'invention

Selon l'invention, la membrane comporte au moins un micropassage rempli par un matériau poreux, entre des première et seconde faces principales d'un support imperméable.

Des matériaux poreux formés par des dépôts de particules ont été réalisés dans de petites microcavités avec des techniques dites par capillarité ou par sédimentation, mais ces techniques ne sont pas adaptées à une approche industrielle. De telles techniques ont notamment été décrites par Peyrade et al. « Direct observation and localisation of colloidal nanoparticles on patterned surface by capillary forces » Microelectronic Engineering 83 (2006) 1521-1525.

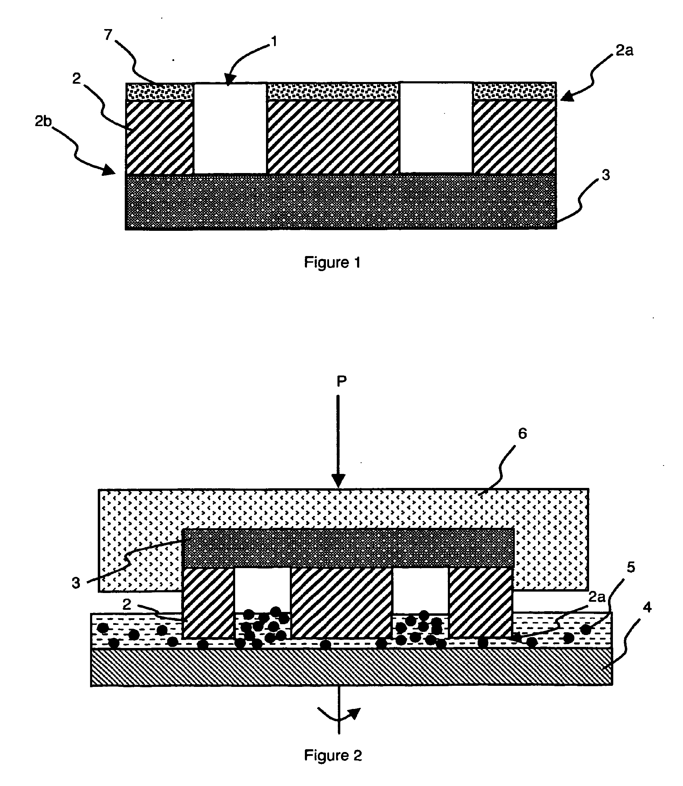

Comme illustré à la figure 1, une membrane comporte un support 2 à l'intérieur duquel des micropassages 1 sont formés entre des première et seconde faces principales 2a et 2b parallèles. Les micropassages 1 sont formés de manière conventionnelle, par exemple, par photolithographie et gravure depuis la première face principale 2a jusqu'à atteindre la seconde face principale 2b.

Le support 2 peut être constitué par un substrat, par exemple, un substrat en silicium ou un substrat en verre ou être composé par un empilement de couches. Le support 2 peut également être en Cu, Al, Fe, Co, Ni, Pd, Pt, W, Cr, TiN, TaN, Ta, Ti, Au, Ru, leurs alliages ou leurs oxydes. Le support 2 est réalisé dans un matériau qui est imperméable et inerte aux différents produits qui peuvent être utilisés avec la membrane.

Dans un mode de réalisation particulier, illustré à la figure 1, une couche de maintien 3 est, avantageusement, formée sur la seconde face principale 2b du support. Les micropassages 1 sont ensuite réalisés depuis la première face principale 2a jusqu'à atteindre la couche de maintien 3. Lors de la formation des micropassages, la couche de maintien peut être partiellement gravée. Les micropassages 1 sont donc formés dans le support 2 mais sont recouverts par la couche de maintien 3. La couche de maintien 3 apporte une facilité de réalisation car elle peut être éliminée facilement. La couche 3 assure un maintien mécanique, mais peut aussi servir de couche d'arrêt à la formation de nanotubes ou pour une étape de polissage.

La première face principale 2a du support, qui comporte les micropassages 1, est alors soumise à un procédé de dépôt mécano-chimique, qui se rapproche des procédés de polissage mécano-chimique. Ainsi, comme illustré à la figure 2, la première face principale 2a, sur laquelle débouchent les micropassages 1, est mise en contact avec un tissu 4 recouvert par une solution aqueuse qui comporte des particules 5. De manière conventionnelle, une force est appliquée sur le support suivant un axe formant un angle non nul par rapport au plan du support. Cette force se traduit par la création d'une pression P entre le support 2 et le tissu 4, perpendiculairement au plan du support 2. De ce fait, la pression ou sa force représentative est perpendiculaire au plan du support ou il peut exister un angle avantageusement compris entre 0 et 5° entre la pression, donc sa force représentative, et la perpendiculaire au plan du support. De plus, le support 2 se déplace, par exemple par rotation, par rapport au tissu 4 ou inversement, dans un plan parallèle au plan du support 2. De manière générale, le polissage mécano-chimique est décrit par Xie et al « Effects of particle size, polishing pad and contact pressure in free abrasive polishing », WEAR 200 (1996) 281-285.

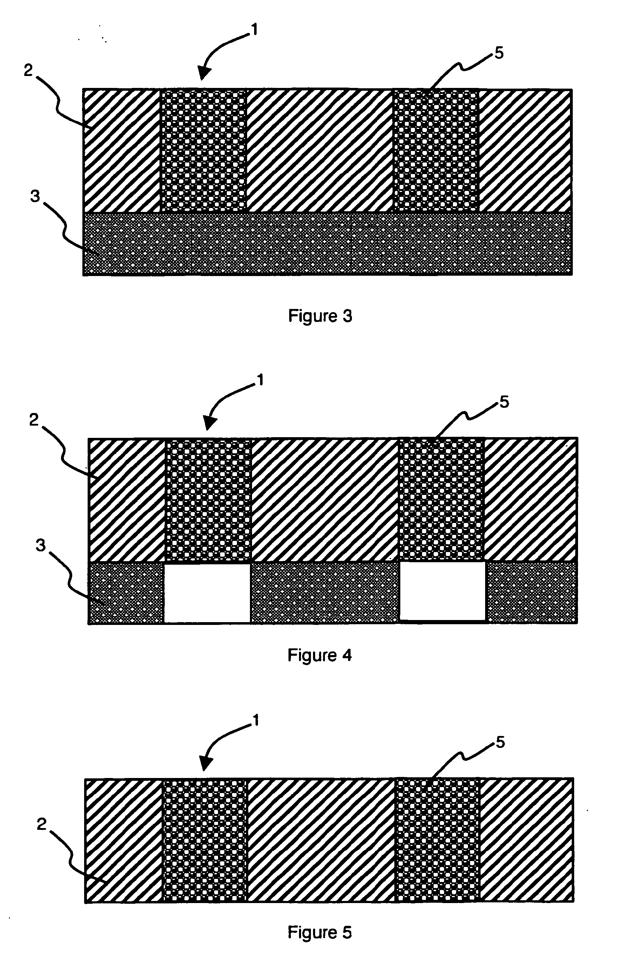

Comme illustré à la figure 3, lors du dépôt mécano-chimique, au moins une particule 5 est introduite dans chaque micropassage 1, qui était initialement vide. Un matériau poreux est ainsi formé à l'intérieur du micropassage. Il est constitué par la ou les particules et le vide (ou gaz) qui occupe le volume restant du micropassage. Le matériau poreux peut remplir complètement ou partiellement le micropassage 1. Le matériau poreux peut être constitué par une seule particule, mais, de manière classique, il est formé par une pluralité de particules 5. Avantageusement, ces particules 5 sont comprimées dans le micropassage pour former ainsi des motifs en matériau poreux mécaniquement plus résistants. Le matériau poreux est un matériau perméable. En effet, la disposition homogène des pores dans le matériau poreux autorise l'écoulement d'un fluide à travers ce dernier.

Le dépôt mécano-chimique peut être réalisé par des équipements conventionnels de polissage mécano-chimique, par exemple par des équipements de type Mirra ou Reflexion de la société Applied Materials ® ou par des équipements de type Megapol M550 de la société Alpsitec ou par des équipements de type Frex de la société Ebara.

Comme pour un polissage mécano-chimique classique, le support 2 est solidaire d'une tête mobile 6, qui permet d'exercer une pression P entre la face du support comportant les micropassages 1 et le tissu 4 (« pad » en anglais) sur lequel repose le support (figure 2). La pression d'appui exercée par la tête d'appui sur le support 2 est comprise entre 0,02 et 1daN/cm². Cette pression d'appui permet d'introduire les particules 5 dans les micropassages 1, de les compresser. En modulant la valeur de la pression d'appui, il est possible de moduler la porosité finale du matériau poreux, c'est-à-dire la proportion de vide dans le matériau final. Si la couche de maintien 3 n'est pas déposée sur le support, la tête d'appui 6 vient recouvrir les micropassages au niveau de la seconde face 2b et permettre l'application d'une pression sur les particules situés dans les micropassages.

Les tissus 4 utilisés pour le dépôt mécano-chimique sont identiques à ceux qui sont employés dans les procédés de polissage conventionnels. De manière classique, les caractéristiques du tissu 4 dépendent de l'application recherchée, des matériaux se trouvant à la surface du support et des dimensions des micropassages à remplir.

Si la plus petite dimension des micropassages 1 est supérieure à 10µm, des tissus 4 dits « d'aplanissement » en polyuréthane, avec une dureté classée en « shore D » comprise entre 50 et 70, une densité comprise entre 60 et 90mg/cm³ et une compressibilité inférieure à 4% sont utilisés. Avantageusement, un tissu commercial IC1000^{™} de la société Rohm & Haas est utilisé.

Si la plus petite dimension des micropassages 1 est inférieure à 10µm, des tissus 4 dits « médium », avec une dureté classée en « shore A » comprise entre 50 et 70, une densité comprise entre 20 et 40mg/cm³ et une compressibilité comprise entre 10 et 25% sont utilisés. Avantageusement, un tissu commercial Suba IV^{™} de la société Rohm & Haas est utilisé.

Si les dimensions des micropassages 1 sont de l'ordre du micron et/ou si la face du support, en contact avec le tissu 4, comporte des matériaux ductiles qui risquent d'être rayés par des particules, des tissus 4 de polissages dits « de finition » sont utilisés, avec une dureté classée en « shore A » de 50 à 80, une densité inférieure à 20mg/cm³, et une compressibilité supérieure ou égale à 30% sont utilisés. Avantageusement, un tissu 4 commercial Politex^{™} de la société Rohm & Haas est utilisé.

Comme dans le cas d'un polissage mécano-chimique, lors du dépôt, le support 2 est en contact avec une solution aqueuse. Typiquement, le dépôt utilise une suspension aqueuse de particules colloïdales, anioniques ou cationiques, dont le pH est compris entre 1,5 et 12 pour obtenir une suspension stable de particules. La modulation du pH permet de fixer le potentiel zeta qui contrôle la séparation des particules 5 dans la solution aqueuse.

Les particules 5 en suspension dans la solution aqueuse peuvent être pures ou constituées d'un matériau de coeur recouvert par un matériau d'enrobage. Si les particules 5 sont pures, elles sont, par exemple, en silice, en carbone, en oxyde de cérium, en oxyde de titane, en alumine, en matériau polymère ou en différents métaux, par exemple, Fe, Co, Au, Pd, Ni, Pt, Ru, Sn, Mo, ZnO, Ce. Si les particules 5 sont enrobées le matériau d'enrobage est, par exemple, de l'alumine, de l'oxyde de cérium ou de l'oxyde de fer. Ce sont par exemple, des particules de silice ou de matériaux ou composés polymères enrobées d'alumine ou d'oxyde de cérium. L'utilisation d'un matériau d'enrobage permet de faire varier le potentiel zeta et permet ainsi une séparation aisée des particules élémentaires de la suspension colloïdale.

La taille des particules 5 élémentaires est, avantageusement, comprise entre 3 et 300 nm. Par ailleurs, le pourcentage massique des particules 5 dans la solution aqueuse est, avantageusement, compris entre 0,0001 et 50%. Les particules peuvent être sphériques ou de forme quelconque.

A titre d'exemple, les solutions aqueuses commerciales Klebosol^{™} 1508-35 et T605 peuvent être utilisées .

La solution aqueuse commerciale Klebosol^{™} 1508-35 est commercialisée par la société Rohm & Haas et comporte 30% en masse de particules de silice ayant un diamètre de 35nm, dans une solution anionique avec un pH de l'ordre de 10 ajusté avec du NH₄OH. La solution aqueuse commerciale T605 est commercialisée par la société Hitachi Chemical et comporte 0,1% en masse de particules de silice ayant un diamètre de 90nm, dans une solution anionique avec un pH de l'ordre de 6,5.

Par ailleurs, le dépôt mécano-chimique est avantageusement réalisé avec un débit de solution aqueuse compris entre 5 et 300 ml/min pour des substrats variant entre 1 et 450 mm. Une vitesse relative d'un point du substrat par rapport à un point du tissu 4 est alors comprise entre 0,1 et 0,3 m/s. De manière conventionnelle, la température du dépôt est comprise entre 2 et 70°C. Le débit de la fourniture en solution aqueuse est ajusté pour assurer un renouvellement des particules et pour garantir un excès de particules 5 dans les pores du tissu de polissage.

A titre d'exemple, une pression d'appui de l'ordre de 0,1 daN/cm2, une vitesse de 1m/s, un débit de solution aqueuse de 150ml/min pour des substrats de 200mm de diamètre et une température de 52°C sont utilisés pour réaliser le dépôt mécano-chimique. Dans ces conditions, des particules 4 en oxyde de silicium ayant un diamètre moyen de l'ordre de 35nm sont utilisées avec des microcavités de l'ordre de 150nm de diamètre. La solution aqueuse Klebosol^{™} 1508-35 est avantageusement utilisée.

De manière classique, lors du dépôt mécano-chimique, le tissu 4 de polissage ne retire les particules 5 de la solution aqueuse que sur les parties en contact avec le support, c'est-à-dire sur les parties du support 2 qui bordent les micropassages et/ou dans les zones où le matériau poreux dépasse du plan du support.

Cependant, lors du dépôt mécano-chimique, il pourrait y avoir enlèvement de matière sur les parties supérieures de la première face du support, pendant que les micropassages sont remplis par les particules de la solution aqueuse. L'enlèvement de matière est fonction des conditions du procédé (pression d'appui, matériau des particules, solution aqueuse...) et du type de matériau présent à la surface du support.

Si le matériau du support 2 qui est en contact avec le tissu 4 est trop fragile, et peut être éliminé lors du procédé de dépôt, un matériau de renfort 7 est avantageusement utilisé (figure 1). Ce matériau de renfort 7 est alors choisi de manière à être résistant au procédé mécano-chimique, afin de réduire, voire éliminer totalement, l'enlèvement de matière sur les parties du support qui sont en contact avec le tissu 4 et la solution aqueuse. La couche de renfort 7 est formée sur la surface 2a et les micropassages 1 sont gravés dans le support 2 à travers la couche de renfort. La couche de renfort est, par exemple, en nitrure de silicium.

De manière également avantageuse, les parois latérales des micropassages 1 sont recouvertes par une couche en matériau de couverture (non représenté), par exemple, par un matériau isolant, par exemple, en oxyde de silicium. Bien que les parois latérales du micropassage 1 soient recouvertes par la couche de couverture, la majeure partie du volume du micropassage 1 n'est pas remplie. De plus, la couche de couverture est éliminée dans le fond du micropassage 1. Typiquement, le fond de la couche est gravé par plasma comme pour la formation d'espaceurs dans le domaine de la microélectronique.

Si le matériau du support 2 n'est pas chimiquement compatible avec le matériau utilisé pour les particules 5, ces particules n'adhèrent pas à la surface du matériau des cavités et les particules sont évacuées lors du rinçage à l'eau en fin de polissage et/ou lors du nettoyage par brossage et séchage de la plaque. Le matériau de couverture est donc avantageusement utilisée suivant les matériaux présents et les applications recherchées. Le matériau de couverture peut servir à l'adhérence des particules, mais également comme couche d'isolation électrique, ou comme couche de barrière à la diffusion de dopant ou à la formation de dendrites en métal.

La pression exercée par le tissu 4 sur les particules disposées dans les micropassages provoque la création de liaisons entre les particules ainsi qu'avec les parois des micropassages. Lors du séchage, les particules restent liées chimiquement ou de manière électrostatique entre elles et aux parois du micropassage. La pression exercée sur les particules peut aussi provoquer un frittage des particules, améliorant ainsi la résistance mécanique de l'ensemble du micropassage.

Le nombre de particules 5 disposées dans le micropassage 1 et la taille des pores du matériau poreux obtenu sont fonctions des dimensions du micropassage 1, des dimensions des particules 5 et de la pression exercée sur les particules.

Pour obtenir une particule par micropassage, il est avantageux d'opter pour une particule qui a sensiblement la même dimension que le micropassage. Pour obtenir deux particules par micropassage, il est avantageux de choisir des particules, supposées sphériques, qui ont des diamètres sensiblement égaux aux deux tiers de la dimension du micropassage, supposé cubique. Ainsi, pour disposer au moins deux particules, sphériques, dans une cavité, il est nécessaire qu'elles aient un diamètre inférieur au deux tiers de la plus petite dimension du micropassage.

Si la membrane est prévue pour être soumise à un fort débit, il est préférable que les micropassages soient remplis avec peu de particules. Au contraire pour une membrane qui présente une très grande efficacité de pouvoir catalytique, la surface d'échange doit être importante, les micropassages sont alors remplis avec un très grand nombre de particules. L'homme du métier fera un compromis entre ces deux besoins selon l'application de la membrane. Les documents « High performance nanoporous carbon membranes for air separation » Carbon 45 (2007) 1267-1278 et « Crossflow membrane filtration of interacting nanoparticle suspensions » Journal of Membrane Science 284 (2006) 361-372 décrivent l'influence de la porosité et de la taille des pores sur la sélectivité entre deux gaz mélangés. Ces documents décrivent également l'influence de la forme et de la taille des particules sur les caractéristiques de la membrane. Par ailleurs, ils décrivent l'influence de l'agencement des particules sur le flux passant à travers les membranes.

En supposant que les micropassages 1 soient cubiques et que les particules 5 soient sphériques, ou si les particules sont beaucoup plus petites que les dimensions du micropassage, le volume occupé par les particules ne peut pas dépasser, théoriquement, 74% sans compression. En cristallographie, une compacité égale à 74% est obtenue avec des empilements dits de type « hexagonal compact » ou « cubique à faces centrées ». Ainsi, les motifs en matériau poreux ont au minimum 26% de porosité. Pratiquement, la compacité réelle de telles structures ne dépasse pas 70%. Il y a donc 30% de porosité dans les micropassages sans compression. Par ailleurs, si les particules sphériques ont un diamètre sensiblement égal à celui du micropassage, le micropassage cubique ne peut contenir qu'une seule particule et la porosité atteint 50%. De cette manière, il est donc possible de moduler la porosité en contrôlant la taille des particules se trouvant dans le micropassage. Pour diminuer la valeur de la porosité, les particules ont un diamètre très inférieur à celui du micropassage, de préférence, inférieur au tiers de la largeur du micropassage. Ainsi, au moins trois particules sont disposées dans le micropassage et une porosité de l'ordre de 26% peut être obtenue.

Le matériau poreux peut être un matériau diélectrique, il est alors formé par des particules 5 en matériau diélectrique et/ou recouvertes par un matériau diélectrique. Les particules sont, par exemple, en silice, en oxyde de cérium, en alumine ou en matériau polymère si elles sont pures. Cependant, les particules peuvent également être en matériau conducteur, par exemple, en carbone, en fer, en cobalt, en platine, en nickel, recouvert par un matériau diélectrique. Le matériau poreux peut également être un matériau catalyseur qui autorise des réactions de décomposition de gaz ou de composés en voie liquide ou gazeuse. La réalisation d'une membrane comportant des zones en matériau catalyseur poreux est particulièrement intéressante car, la température du procédé étant faible, typiquement inférieure à 100°C, les particules en matériau catalyseur sont gardées totalement actives.

Comme illustré à la figure 3, les micropassages 1 remplis par le matériau poreux forme des passages entre les deux faces principales 2a et 2b du support 2. De manière conventionnelle, le support 2 et la couche de maintien 3 sont des matériaux différents, cependant, ils peuvent également comporter les mêmes constituants dans des proportions différentes. La couche de maintien 3 est, par exemple, en Al₂O₃, SiO₂, SiN, SiCN, SiC, SiOC ou en matériau polymère. La couche de maintien 3 peut également être un métal.

Si la couche de maintien 3 est en matériau imperméable, la couche de maintien est alors éliminée au moins un niveau des passages (figure 4), par toute technique adaptée. Cette élimination de la couche de maintien permet l'écoulement d'un fluide depuis une des faces principales de la membrane, par exemple la face 2b, jusqu'à l'autre face 2a. La couche de maintien 3 peut être, par exemple, en oxyde de silicium et sa dégradation est ensuite réalisée au moyen d'acide fluorhydrique. La couche de maintien présente une sélectivité de gravure vis-à-vis du matériau poreux et du support 2.

Si la couche de maintien 3 est perméable au fluide qui doit s'écouler au travers de la membrane, elle peut être laissée (figure 3) ou alors être éliminée (figure 5) pour éviter des pertes de charges trop importantes au niveau de la membrane.

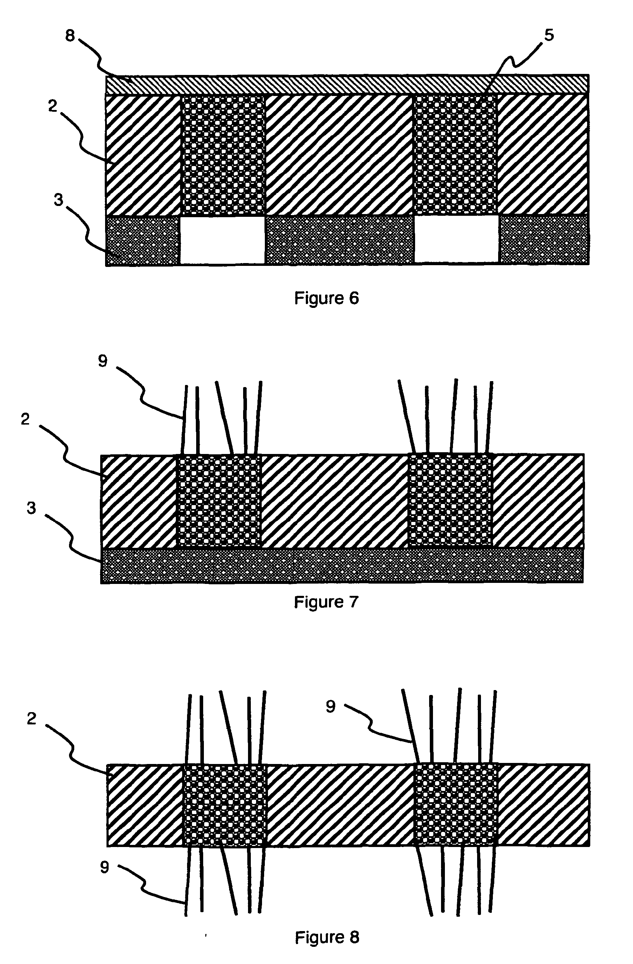

Dans une variante de réalisation, illustrée à la figure 6, une couche perméable 8 peut être formée sur au moins une face principale 2a ou 2b de la membrane. Avantageusement, cette couche perméable 8 est en matériau électriquement conducteur, cependant, elle peut également être en matériau semi-conducteur ou diélectrique. Encore plus avantageusement, la couche perméable est une couche qui permet la conduction de protons dans la membrane. La couche perméable est alors choisie parmi le nafion®, les polybenzimidazoles, les polyétheréthercétones sulfonés, les polyimides sulfonés. La membrane peut, avantageusement, être utilisée dans une pile à combustible.

Dans une autre variante de réalisation (non représentée), le micropassage 1 peut être nettoyé afin d'éliminer des résidus contenus dans la solution aqueuse et qui ont été introduits avec les particules 5. Les micropassages sont alors rincés au moyen d'une solution chimique qui peut être un mélange d'eau, d'acide fluorhydrique, d'acide sulfurique, d'acide chlorhydrique et/ou de péroxyde d'hydrogène. Il est également possible de nettoyer le passage au moyen d'un traitement thermique sous oxygène à une température supérieure à 200°C, ou d'utiliser un plasma déporté d'oxygène.

Le matériau poreux formé dans les micropassages 1 peut également être utilisé comme un matériau catalyseur pour localiser la croissance de nanotubes ou de nanofils 9, comme illustré aux figures 7 et 8. Dans ce cas, le support 2 comportant les micropassages 1 remplis par le matériau catalyseur poreux est soumis à un procédé de croissance de nanotubes ou de nanofils. Les nanofils ou nanotubes peuvent être électriquement conducteurs ou non. Il est possible de greffer des nanoparticules, par exemple Pt ou Ru, sur les nanotubes. Cette application est particulièrement intéressante pour les membranes à oxydation du méthanol dans les piles à combustibles. L'augmentation de la surface de contact permet de ralentir les flux aux alentours des micropassages et ainsi d'augmenter l'efficacité de la membrane. La densité de nanotubes ou de nanofils dépend directement de la densité et de la taille des particules.

La croissance de nanofils de silicium est obtenue à partir d'un matériau catalyseur poreux comportant des particules 5 en or. Par ailleurs, la croissance de nanotubes de carbone est, avantageusement, obtenue à partir d'un matériau catalyseur poreux qui comporte des particules 5 en Fe, Ni et/ou Co. Cependant, le matériau catalyseur poreux peut être en tout matériau adapté à la croissance de nanofils et/ou nanotubes et notamment en oxyde de silicium.

Comme précédemment, le matériau poreux est formé à partir des particules 5 compactées dans les micropassages 1. Lors du procédé de croissance des nanotubes ou nanofils 9, ces derniers croissent verticalement depuis les particules 5. Selon la porosité du matériau catalyseur, la densité de nanotubes ou nanofils provenant du motif en matériau poreux peut varier.

Si la couche de maintien 3 est présente lors du procédé de croissance de nanotubes ou de nanofils, la croissance de ces derniers a lieu depuis la surface libre dans une direction sensiblement verticale par rapport au plan du support 2. Si la couche de maintien est éliminée avant la croissance, les nanotubes ou de nanofils croissent depuis les deux surfaces libres, c'est-à-dire sur chaque face principale de la membrane.

La modulation en composition chimique des particules permet de réaliser des membranes plurispécifiques, c'est-à-dire des membranes qui sont aptes à catalyser plusieurs espèces mélangées dans une composition initiale. La modulation de la taille des particules (même si elles sont de même composition chimique) permet de faire varier la réactivité des particules. La modulation de la taille des particules permet d'obtenir une large gamme d'énergie de surface et offrir une large gamme de réactivité à travers un même micropassage. En effet, la réactivité exceptionnelle des nanoparticules est liée au fait qu'elles comportent un rapport élevé entre les atomes de surface qui ont des liaisons atomiques libres et les atomes de volumes qui n'ont pas de liaisons libres. La réactivité augmente lorsque le nombre de liaisons libres augmente. De ce fait, il est donc possible de catalyser une espèce donnée avec une grande probabilité en utilisant une large gamme de tailles de nanoparticules.

La membrane peut être constituée par un support imperméable qui comporte des passages traversant, ces passages traversant sont remplies par un matériau poreux.

## Revendications

1. Procédé de formation d'une membrane poreuse **caractérisé en ce qu'**il comporte successivement :
- la formation, dans un support (2) imperméable, entre des première et seconde faces principales, d'au moins un micropassage (1) qui traverse le support,
- la mise en contact de la première face principale (2a) avec une solution aqueuse comportant une pluralité de particules (5) en suspension,
- l'application simultanée d'une pression (P), perpendiculaire au plan du support (2), entre un tissu (4) et ladite première face (2a) et un déplacement relatif du tissu (4), et de ladite première face, pour introduire dans chaque micropassage (1) au moins une particule (5) formant un matériau poreux, ledit déplacement relatif étant réalisé parallèlement au plan du support (2).

2. Procédé selon la revendication 1, **caractérisé en ce que** la seconde face (2b) principale du support est recouverte par une couche de maintien (3) imperméable, ladite couche de maintien est éliminée au moins au niveau des micropassages (1) auprès remplissage des micropassages par le matériau poreux.

3. Procédé selon la revendication 1, **caractérisé en ce que** la seconde face (2b) principale du support est recouverte par une couche de maintien (3) perméable

4. Procédé selon l'une quelconque des revendications 1 à 3, **caractérisé en ce que** la porosité du matériau remplissant le micropassage (1) est comprise entre 26% et 50%.

5. Procédé selon l'une quelconque des revendications 1 à 4, **caractérisé en ce que** les particules (5) étant sphériques, elles ont un diamètre inférieur au deux tiers de la plus petite dimension du micropassage (1).

6. Procédé selon l'une quelconque des revendications 1 à 5, **caractérisé en ce que** le diamètre des particules (5) est compris entre 3 et 300nm.

7. Procédé selon l'une quelconque des revendications 1 à 6, **caractérisé en ce que** les particules (5) sont choisies parmi la silice, le carbone, l'oxyde de cérium, l'oxyde de titane, le fer, le cobalt, l'or, le platine, le palladium, le nickel, le ruthénium, l'étain, le molybdène, l'oxyde de zinc, le cérium, l'alumine et des matériaux ou composés polymères.

8. Procédé selon l'une quelconque des revendications 1 à 7, **caractérisé en ce que** le pourcentage massique des particules (5) dans la solution aqueuse est compris entre 0,0001 - 50%.

9. Procédé selon l'une quelconque des revendications 1 à 8, **caractérisé en ce que** la pression exercée est comprise entre 0,02daN/cm² et 1daN/cm².

10. Procédé selon l'une quelconque des revendications 1 à 9, **caractérisé en ce qu'**une couche de renfort (7) est déposée sur ladite première face du support (2) avant formation des micropassages (1).

11. Procédé selon la revendication 10, **caractérisé en ce que** la couche de renfort (7) est en nitrure de silicium.

12. Procédé selon l'une quelconque des revendications 1 à 11, **caractérisé en ce qu'**au moins une partie des particules sont en matériau catalyseur.

13. Procédé selon l'une quelconque des revendications 1 à 12, **caractérisé en ce qu'**une couche perméable conductrice de proton est formée sur au moins une des faces principales, après remplissage des micropassages.

14. Procédé selon la revendication 13, **caractérisé en ce que** la couche perméable est choisie parmi les polybenzimidalones, les polyétheréthercétones sulfonés et les polyimides sulfonés.

## Claims

1. A method for forming a porous membrane **characterized in that** it successively comprises:
- formation, in an impermeable support (2) between first and second main surfaces, of at least one micropassage (1) that passes through the support,
- bringing the first main surface (2a) into contact with an aqueous solution comprising a plurality of particles (5) in suspension,
- simultaneously applying a pressure (P) between a pad (4) and said first surface (2a), and relative movement of the pad (4) and of said first surface to introduce at least one particle (5) forming a porous material into each micropassage (1), said relative movement being realized parallel to the plane of the support (2).

2. The method according to claim 1, **characterized in that** second main surface (2b) of the support is covered by an impermeable support layer (3), said support layer being eliminated at least at the level of the micropassages (1) after the micropassages have been filled by the porous material.

3. The method according to claim 1, **characterized in that** the second main surface (2b) of the support is covered by a permeable support layer (3).

4. The method according to any one of claims 1 to 3, **characterized in that** the porosity of the material filling the micropassage (1) is comprised between 26% and 50%.

5. The method according to any one of claims 1 to 4, **characterized in that** the particles (5) being spherical, they have a diameter of less than two thirds of the smallest dimension of the micropassage (1).

6. The method according to any one of claims 1 to 5, **characterized in that** the diameter of the particles (5) is comprised between 3 and 300nm.

7. The method according to any one of claims 1 to 7, **characterized in that** the particles (5) are chosen from silica, carbon, cerium oxide, titanium oxide, iron, cobalt, gold, platinum, palladium, nickel, ruthenium, tin, molybdenum, zinc oxide, cerium, alumina and polymer materials or compounds.

8. The method according to any one of claims 1 to 7, **characterized in that** the mass percentage of particles (5) in the aqueous solution is comprised between 0.0001 and 50%.

9. The method according to any one of claims 1 to 8, **characterized in that** the pressure exerted is comprised between 0.02daN/cm² and 1daN/cm².

10. The method according to any one of claims 1 to 9, **characterized in that** a strengthening layer (7) is deposited on said first surface of the support (2) before formation of the micropassages (1).

11. The method according to claim 10, **characterized in that** the strengthening layer (7) is made from silicon nitride.

12. The method according to any one of claims 1 to 11, **characterized in that** at least a part of the particles are made from catalyst material.

13. The method according to any one of claims 1 to 12, **characterized in that** a proton-conducting permeable layer is formed on at least one of the main surfaces after the micropassages have been filled.

14. The method according to claim 13, **characterized in that** the permeable layer is chosen from polybenzimidazoles, sulfonated polyether-etherketones, and sulfonated polyimides.

## Patentansprüche

1. Verfahren zur Ausbildung einer porösen Membran, **dadurch gekennzeichnet, dass** es nacheinander umfasst:
- die Bildung - in einem undurchlässigen Träger (2), zwischen einer ersten und einer zweiten Hauptseite - wenigstens eines Mikrodurchgangs (1), der den Träger durchquert,
- das Inkontaktbringen der ersten Hauptseite (2a) mit einer wässrigen Lösung, die eine Vielzahl von Schwebeteilchen (5) umfasst,
- das gleichzeitige Anlegen eines Druckes (P) senkrecht zur Ebene des Trägers (2), zwischen einem Gewebe (4) und der ersten Seite (2a), sowie einer Relativbewegung des Gewebes (4) und der ersten Seite, um in jeden Mikrodurchgang (1) wenigstens ein ein poröses Material bildendes Teilchen (5) einzuführen, wobei die Relativbewegung parallel zu der Ebene des Trägers (2) vollzogen wird.

2. Verfahren nach Anspruch 1, **dadurch gekennzeichnet, dass** die zweite Hauptseite (2b) des Trägers mit einer undurchlässigen Halteschicht (3) überzogen ist, die Halteschicht nach dem Füllen der Mikrodurchgänge mit dem porösen Material wenigstens im Bereich der Mikrodurchgänge (1) entfernt wird.

3. Verfahren nach Anspruch 1, **dadurch gekennzeichnet, dass** die zweite Hauptseite (2b) des Trägers mit einer durchlässigen Halteschicht (3) überzogen ist.

4. Verfahren nach einem der Ansprüche 1 bis 3, **dadurch gekennzeichnet, dass** die Porosität des den Mikrodurchgang (1) füllenden Materials zwischen 26 % und 50 % liegt.

5. Verfahren nach einem der Ansprüche 1 bis 4, **dadurch gekennzeichnet, dass** wenn die Teilchen (5) kugelförmig sind, sie einen Durchmesser aufweisen, der kleiner als zwei Drittel der kleinsten Abmessung des Mikrodurchgangs (1) ist.

6. Verfahren nach einem der Ansprüche 1 bis 5, **dadurch gekennzeichnet, dass** der Durchmesser der Teilchen (5) zwischen 3 und 300 nm beträgt.

7. Verfahren nach einem der Ansprüche 1 bis 6, **dadurch gekennzeichnet, dass** die Teilchen (5) aus Siliziumdioxid, Kohlenstoff, Ceroxid, Titanoxid, Eisen, Kobalt, Gold, Platin, Palladium, Nickel, Ruthenium, Zinn, Molybdän, Zinkoxid, Cer, Aluminiumoxid und aus Polymermaterialien oder -verbindungen ausgewählt sind.

8. Verfahren nach einem der Ansprüche 1 bis 7, **dadurch gekennzeichnet, dass** der Masseprozentsatz der Teilchen (5) in der wässrigen Lösung zwischen 0,0001 und 50 % beträgt.

9. Verfahren nach einem der Ansprüche 1 bis 8, **dadurch gekennzeichnet, dass** der ausgeübte Druck zwischen 0,02 daN/cm² und 1 daN/cm² beträgt.

10. Verfahren nach einem der Ansprüche 1 bis 9, **dadurch gekennzeichnet, dass** auf der ersten Seite des Trägers (2), vor dem Ausbilden der Mikrodurchgänge (1), eine Verstärkungsschicht (7) abgeschieden wird.

11. Verfahren nach Anspruch 10, **dadurch gekennzeichnet, dass** die Verstärkungsschicht (7) aus Siliziumnitrid besteht.

12. Verfahren nach einem der Ansprüche 1 bis 11, **dadurch gekennzeichnet, dass** wenigstens ein Teil der Teilchen aus Katalysatormaterial besteht.

13. Verfahren nach einem der Ansprüche 1 bis 12, **dadurch gekennzeichnet, dass** auf wenigstens einer der Hauptseiten, nach dem Füllen der Mikrodurchgänge, eine protonenleitende, durchlässige Schicht ausgebildet wird.

14. Verfahren nach Anspruch 13, **dadurch gekennzeichnet, dass** die durchlässige Schicht aus den Polybenzimidazolen, den sulfonierten Polyetheretherketonen und den sulfonierten Polyimiden ausgewählt ist.
